# EUROPÄISCHE PATENTANMELDUNG

(11) **EP 4 749 594 A1**
(43) Veröffentlichungstag der Anmeldung: **27.05.2026**
(21) Anmeldenummer: 24214340.2
(22) Anmeldetag: 20.11.2024
(51) Int. Cl.: G07C 5/00, G07C 5/08

(54) **VERFAHREN UND VORRICHTUNG ZUM IDENTIFIZIEREN EINES FAHRZEUGS**

(71) Anmelder: Hella Gutmann Solutions GmbH, 79241 Ihringen (DE)
(72) Erfinder: Abraham, Heiko, 79241 Ihringen (DE); Frödrich, Matthias, 79241 Ihringen (DE); Kolberg, Ralph, 79241 Ihringen (DE)
(74) Vertreter: Pfenning, Meinig & Partner mbB

(57) **Zusammenfassung**

Die vorliegende Erfindung betrifft ein Verfahren zum Identifizieren eines Fahrzeugs und eine Vorrichtung zum Durchführen des Verfahrens. Darüber hinaus betrifft die vorliegende Erfindung ein Computerprogramm mit Programmcodemitteln, das dazu eingerichtet ist, das Verfahren auszuführen, und ein maschinelesbares Speichermedium mit dem darauf gespeicherten Computerprogramm.

## Beschreibung

Die vorliegende Erfindung betrifft ein Verfahren zum Identifizieren eines Fahrzeugs und eine Vorrichtung zum Durchführen des Verfahrens. Darüber hinaus betrifft die vorliegende Erfindung ein Computerprogramm mit Programmcodemitteln, das dazu eingerichtet ist, das Verfahren auszuführen, und ein maschinelesbares Speichermedium mit dem darauf gespeicherten Computerprogramm.

Moderne Fahrzeuge sind komplexe elektrische und mechanische Systeme, die eine Mehrzahl von miteinander kommunizierenden Komponenten aufweisen, um einen zuverlässigen und funktionalen Fahrzeugbetrieb zu unterstützen.

Die Komponenten können für Störungen, Ausfälle und Fehler anfällig sein, welche den Fahrzeugbetrieb beeinträchtigen. Im Falle von Störungen, Ausfällen oder Fehlern kann die beeinträchtigte Komponente einen entsprechenden Fehlercode auslösen, zum Beispiel Diagnostic Trouble Code (DTC). Der Fehlercode wird üblicherweise in einem fahrzeugseitigen Speicher gespeichert und löst ein entsprechendes Warnsignal aus, durch das ein Fahrer des betroffenen Fahrzeugs informiert und veranlasst wird, eine Werkstatt aufzusuchen.

Üblicherweise weist ein Fahrzeug eine Fahrzeugdiagnoseschnittstelle auf, welche sich oft unter dem Lenkrad im Fußraumbereich des Fahrzeugs befindet. An die Fahrzeugdiagnoseschnittstelle kann ein externes Fahrzeugdiagnosegerät angeschlossen werden, um die während des Betriebs des Fahrzeuges generierten Fehlercodes auszulesen. Der ausgelesene Fehlercode kann durch das Fahrzeugdiagnosegerät analysiert werden, um zu diagnostizieren, welche Komponente gewartet, repariert oder ausgetauscht werden muss, damit der Fehler behoben werden kann.

Obwohl das Fahrzeugdiagnosegerät Fehlercodes auslesen kann, liefert nicht jedes Fahrzeug beim Auslesen der Fehlercodes fahrzeugidentifizierende Beschreibungsdaten, die ausreichen, um das Fahrzeug zweifelfrei identifizieren zu können. Selbst wenn Identifikationsmittel wie Fahrzeugidentifizierungsnummer, Motorcode, oder Steuergerätidentifizierungsnummer bekannt sind, ist es häufig nicht möglich, mit diesen Informationen genaue Aussagen über den Fahrzeughersteller und/oder das Fahrzeugmodell und/oder den Fahrzeugtyp und/oder den Namen eines Steuergeräts des Fahrzeugs und/oder die Fahrzeugausstattung und/oder die Anzahl von Türen des Fahrzeugs und/oder die Antriebsart des Fahrzeugs und/oder das Ausstattungsassistenzsystem des Fahrzeugs usw. zu treffen. Darüber hinaus variieren die Fehlercodes je nach Fahrzeughersteller, Fahrzeugtyp und/oder Fahrzeugbaujahr. Die Art und Bedeutung der Fehlercodes sind oftmals dem Fahrzeughersteller bekannt, werden jedoch vom Fahrzeughersteller nicht veröffentlicht und/oder jeder Werkstatt mitgeteilt.

Der Mangel an den fahrzeugidentifizierenden Beschreibungsdaten verhindert eine genaue und zuverlässige Fahrzeugdiagnose. Bestehende Identifikationsdienste können die Probleme nicht immer zufriedenstellend lösen.

Aufgrund der zunehmenden Komplexität der Fahrzeugtechnik besteht daher ein großer Bedarf an einer automatisierten und zuverlässigen Fahrzeugidentifizierung für eine Fahrzeugdiagnose im Falle von Störungen, Ausfällen oder Fehlern eines Fahrzeugs.

Ausgehend von den aus dem Stand der Technik bekannten Verfahren und Vorrichtungen und den zuvor erläuterten Problemen liegt der Erfindung die Aufgabe zu Grunde, ein Verfahren bereitzustellen, das eine automatisierte und zuverlässige Identifizierung eines Fahrzeugs ermöglicht, sowie eine Vorrichtung bereitzustellen, die das Verfahren durchführt.

Die vorstehende Aufgabe wird mit dem Verfahren zum Identifizieren eines Fahrzeugs gemäß Anspruch 1 und mit einer Vorrichtung zum Durchführen des Verfahrens gemäß dem unabhängigen Nebenanspruch gelöst. Ein Computerprogramm mit Programmcodemitteln, das dazu eingerichtet ist, das Verfahren auszuführen, ist in einem weiteren unabhängigen Nebenanspruch angegeben. Ein maschinenlesbares Speichermedium mit dem darauf gespeicherten Computerprogramm ist in einem anderen unabhängigen Nebenanspruch angegeben. Vorteilhafte Merkmale und Weiterbildungen ergeben sich aus den abhängigen Ansprüchen und der nachfolgenden Beschreibung.

Gemäß einem ersten Aspekt der vorliegenden Schrift wird ein Verfahren zum Identifizieren eines Fahrzeugs bereitgestellt. Das Verfahren umfasst den Schritt des Empfangens von fahrzeugseitigen Daten und/oder einer Nachricht von einem zu identifizierenden Fahrzeug, insbesondere über eine Fahrzeugdiagnose-Schnittstelle des zu identifizierenden Fahrzeugs. Die fahrzeugseitigen Daten und/oder die Nachricht umfassen mindestens ein erstes Fahrzeugidentifikationsmerkmal. Des Weiteren umfasst das Verfahren den Schritt des Identifizierens des Fahrzeugs mithilfe des mindestens einen ersten Fahrzeugidentifikationsmerkmals. Hierbei ist das mindestens eine erste Fahrzeugidentifikationsmerkmal ein anderes Fahrzeugidentifikationsmerkmal als eine Fahrzeugidentifizierungsnummer, ein Motorcode, und eine Steuergerätidentifizierungsnummer.

Typischerweise lassen sich die fahrzeugseitigen Daten in verschiedene Gruppen unterteilen: Fahrzeugdaten, die sich insbesondere auf den Fahrzeughersteller und/oder das Fahrzeugmodell und/oder den Fahrzeugtyp und/oder den Namen eines Steuergeräts des Fahrzeugs und/oder die Fahrzeugausstattung und/oder die Anzahl von Türen des Fahrzeugs und/oder die Antriebsart des Fahrzeugs und/oder das Ausstattungsassistenzsystem des Fahrzeugs usw. beziehen, Fahrzeugzustandsdaten, und profilrelevante bzw. nutzerindividuelle Daten. Die Fahrzeugzustandsdaten beziehen sich insbesondere auf Fahrzeug-Zustandsinformationen und dienen häufig der Fehlersuche im Fahrzeugbetrieb. Zu den nutzerindividuellen Daten gehören z. B. eine exakte GPS-Position des Fahrzeuges, die gefahrenen Kilometer, die Betriebsstunden der Fahrzeugbeleuchtung, und/oder serverbasierte Anwendungsprogramme. Diese ergeben ein individuelles Profil des Fahrers.

Unter der Nachricht kann Benachrichtigung von Informationen verstanden werden, die sich quantitativ als Signal und qualitativ als bedeutungstragendes Zeichen oder Zeichenfolge beschreiben lässt. Die Informationen zur Nachricht können den Inhalt der Informationen sowie die Art und Weise, in der die Informationen benachrichtigt werden, umfassen, z. B. Header, Aufbau, Metadaten der Nachricht. Die Informationen werden in der Regel in einem Kommunikationsprozess von einem Sender an einen Empfänger übertragen.

Sowohl die fahrzeugseitigen Daten als auch die Nachricht können insbesondere fahrzeugbezogene Informationen, z. B. Fehlercodes, Fahrzeugsensormesswerte, Steuergeräteeinstellungen, Steuergeräteinformation und/oder Betriebsparameter eines Steuergerätes usw. umfassen.

Als Empfänger der fahrzeugseitigen Daten und/oder der Nachricht kommt z. B. eine Fahrzeugdiagnosevorrichtung in Betracht, die ein dediziertes Fahrzeugdiagnosegerät und/oder ein mobiles Endgerät mit einer optionalen Mobilfunkfunktion und/oder ein OBD-Dongle und/oder eine Cloud außerhalb des Fahrzeugs sein oder umfassen kann. Insbesondere kann der Empfänger eine einzelne der oben beschriebenen Einheiten oder eine Kombination einiger oder aller der oben beschriebenen Einheiten, die zusammen ein System bilden, sein. Der Einfachheit halber symbolisiert im Folgenden die Fahrzeugdiagnosevorrichtung den hier beschriebenen Empfänger.

Die fahrzeugseitigen Daten und/oder die Nachricht können z. B. drahtlos bzw. über eine Luftschnittstelle und/oder drahtgebunden von der oben beschrieben Fahrzeugdiagnosevorrichtung empfangen werden. Die fahrzeugseitigen Daten und/oder die Nachricht können in Form eines Datenpakets oder mehrerer Datenpakete verschickt bzw. empfangen werden.

Bei der Fahrzeugdiagnose-Schnittstelle des zu identifizierenden Fahrzeugs kann es sich um z. B. eine Diagnosebuchse handeln, die eine standardisierte Verbindung darstellt und einen Zugriff auf einzelne, mehrere oder alle Steuergeräte des zu identifizierenden Fahrzeugs ermöglicht. Die Fahrzeugdiagnosevorrichtung kann an die Fahrzeugdiagnose-Schnittstelle des zu identifizierenden Fahrzeugs angeschlossen werden, um die fahrzeugseitigen Daten und/oder die Nachricht zu empfangen. Die Fahrzeugdiagnose-Schnittstelle kann insbesondere als OBD-Buchse und die Fahrzeugdiagnosevorrichtung mit einem zur OBD-Buchse kompatiblen OBD-Stecker ausgebildet sein.

Dadurch, dass die Verfahren zur Identifikation des Fahrzeuges nach dem Stand der Technik lediglich auf einer Fahrzeugidentifizierungsnummer, einem Motorcode, und einer Steuergerätidentifizierungsnummer als Kern-Fahrzeugidentifikationsmerkmal beruhen, kann das erfindungsgemäße Verfahren ein Fahrzeug auch dann identifizieren, wenn die Fahrzeugidentifizierungsnummer, der Motorcode, und die Steuergerätidentifizierungsnummer unbekannt sind oder nicht ausreichen, um das Fahrzeug z. B. hinsichtlich eines Fahrzeugherstellers und/oder eines Fahrzeugmodells und/oder eines Fahrzeugtyps und/oder eines Namens eines Steuergeräts des Fahrzeugs und/oder einer Fahrzeugausstattung und/oder einer Anzahl von Türen des Fahrzeugs und/oder einer Antriebsart des Fahrzeugs und/oder eines Ausstattungsassistenzsystems des Fahrzeugs usw. eindeutig, zweifelfrei und/oder genauer zu identifizieren.

Die oben beschriebenen Fahrzeuginformationen können mittels des mindestens einen ersten Fahrzeugidentifikationsmerkmals festgestellt oder aus dem mindestens einen ersten Fahrzeugidentifikationsmerkmal abgeleitet werden. Die feststellbaren oder ableitbaren Informationen können insbesondere in Kombination miteinander verwendet werden, um das Fahrzeug zu identifizieren.

Die Erfindung schließt also die Lücke im Stand der Technik, indem die Möglichkeit zur Identifizierung eines Fahrzeugs auf der Grundlage mindestens eines nicht Kern-Fahrzeugidentifikationsmerkmals erweitert wird.

In einer vorteilhaften Ausführungsform kann zusätzlich ein zweites Fahrzeugidentifikationsmerkmal verwendet werden. Das zweite Fahrzeugidentifikationsmerkmal kann insbesondere eine Fahrzeugidentifizierungsnummer und/oder einen Motorcode und/oder eine Steuergerätidentifizierungsnummer des zu identifizierenden Fahrzeugs umfassen.

Manchmal kann das erste Fahrzeugidentifikationsmerkmal als Ergänzung zu dem zweiten Fahrzeugidentifikationsmerkmal zur Identifizierung des Fahrzeugs verwendet werden, beispielsweise wenn das zweite Fahrzeugidentifikationsmerkmal allein nicht ausreicht, um das Fahrzeug eindeutig, zweifelfrei und/oder genau zu identifizieren. Zusätzlich oder alternativ kann das erste Fahrzeugidentifikationsmerkmal zur Überprüfung bzw. Kontrolle verwendet werden, um sicherzustellen, dass die Identifizierung des Fahrzeugs mithilfe des zweiten Fahrzeugidentifikationsmerkmals richtig ist.

In einer vorteilhaften Ausführungsform kann das Verfahren den zusätzlichen Schritt des Extrahierens aus den empfangenen fahrzeugseitigen Daten und/oder der empfangenen Nachricht mindestens eines Kommunikationsparameters des zu identifizierenden Fahrzeugs umfassen. Der mindestens eine Kommunikationsparameter kann das mindestens eine erste Fahrzeugidentifikationsmerkmal sein oder umfassen.

Unter einer Kommunikation kann ein Austausch oder eine Übertragung von Datenpaketen zwischen dem zu identifizierenden Fahrzeug und einer Fahrzeugdiagnosevorrichtung verstanden werden. Das zu identifizierende Fahrzeug und die externe Fahrzeugdiagnosevorrichtung kommunizieren typischerweise über ein sogenanntes Diagnoseprotokoll, welches auf einem Kommunikationsprotokoll basiert und spezifische Hardwareverbindungen vorsieht.

Der Kommunikationsparameter kann z. B. aus dem Aufbau und/oder der Codierung und/oder der Datenstruktur und/oder den Metadaten der empfangenen Nachricht, insbesondere deren Kopf, Kopfdaten, Kopfzeilen, Einleitung, Vorspann, Footer oder Trailer, und/oder auch aus einer Bus-Topologie und/oder physikalischen Kommunikationswerten der fahrzeugseitigen Daten wie im Folgenden beschrieben, abgeleitet werden, um das Fahrzeug zu identifizieren.

Darüber hinaus kann der mindestens eine Kommunikationsparameter beispielsweise durch eine einseitige oder eine zweiseitige Kommunikation aus den empfangenen fahrzeugseitigen Daten und/oder der empfangenen Nachricht extrahiert werden.

Unter einer einseitigen Kommunikation kann ein passives Hören verstanden werden, bei welchem die Fahrzeugdiagnosevorrichtung die fahrzeugseitigen Daten und/oder die Nachricht von dem zu identifizierenden Fahrzeug, insbesondere mindestens einem fahrzeugseitigen Steuergerät des zu identifizierenden Fahrzeugs, empfängt, und selbst keine Daten an das zu identifizierende Fahrzeug, insbesondere das mindestens eine fahrzeugseitige Steuergerät des zu identifizierenden Fahrzeugs, sendet.

Die zweiseitige Kommunikation unterscheidet sich von der oben beschriebenen einseitigen Kommunikation dadurch, dass die Fahrzeugdiagnosevorrichtung sowohl fahrzeugseitige Daten von dem zu identifizierenden Fahrzeug, insbesondere mindestens einem fahrzeugseitigen Steuergerät des zu identifizierenden Fahrzeugs, empfängt, als auch Daten an das zu identifizierende Fahrzeug, insbesondere an das mindestens eine fahrzeugseitige Steuergerät des zu identifizierenden Fahrzeugs, sendet. In der zweiseitigen Kommunikation können der Schritt des Sendens und der Schritt des Empfangens nacheinander oder gleichzeitig erfolgen.

Die oben beschriebene Kommunikation zwischen dem zu identifizierenden Fahrzeug und der Fahrzeugdiagnosevorrichtung kann z. B. nach der Norm ISO 15031 geregelt werden. Diese Norm dient dem Auslesen der abgasrelevanten Informationen entsprechend der Gesetzgebung für OBD. Zusätzlich oder alternativ können das zu identifizierende Fahrzeug und die Fahrzeugdiagnosevorrichtung nicht genormt oder über eine andere Kommunikationsnorm miteinander kommunizieren. So werden nicht-abgasrelevante Informationen in der Regel nicht über normierte Protokolle und in der Regel fahrzeugherstellerspezifisch übertragen.

Mit dem OBD-Diagnosesystem aus dem Stand der Technik werden zwar oftmals die auslesbaren Parameter und Werte genormt, allerdings nicht, mit welchem Protokoll sie übertragen werden. Einzelne Hersteller gehen zum Beispiel hinsichtlich eines Kommunikationsprotokolls eigene Wege und auch die Kommunikation der Fahrzeugelektronik untereinander ist nicht einheitlich. Die Fahrzeugelektronik kann hierbei von unterschiedlichen Zulieferern hergestellt werden. Die vorliegende Schrift nutzt eine Auswertung der unterschiedlichen Protokolle und Kommunikationsparameter der verschiedenen Hersteller/Zulieferer aus, um Rückschlüsse auf die Identität des Fahrzeuges zu ziehen.

In einer weiteren vorteilhaften Ausführungsform kann das Verfahren auf einem Anfrage-Antwort-Mechanismus beruhen. Der Anfrage-Antwort-Mechanismus ist ein konkretes Beispiel der oben beschriebenen zweiseitigen Kommunikation, wobei der Schritt des Sendens vor dem Schritt des Empfangens erfolgt. Hierbei kann das Verfahren den Schritt des Sendens mindestens einer Anfrage an das zu identifizierende Fahrzeug, insbesondere an mindestens ein fahrzeugseitiges Steuergerät des zu identifizierenden Fahrzeugs umfassen. Der Schritt des Sendens mindestens einer Anfrage kann beispielsweise so ausgelegt werden, dass die mindestens eine Anfrage direkt von der Fahrzeugdiagnosevorrichtung an das zu identifizierende Fahrzeug, insbesondere an mindestens ein fahrzeugseitiges Steuergerät des zu identifizierenden Fahrzeugs, gesendet wird. Der Schritt des Sendens kann über einen Trigger gestartet werden, z. B. über eine erstmalige Verbindung der Fahrzeugdiagnosevorrichtung mit der Fahrzeugdiagnoseschnittstelle. In diesem Fall kann die mindestens eine Anfrage lokal in der Fahrzeugdiagnosevorrichtung gespeichert werden.

Das Verfahren kann außerdem den Schritt des Empfangens mindestens einer Fahrzeugantwort von dem zu identifizierenden Fahrzeug, insbesondere von dem mindestens einen fahrzeugseitigen Steuergerät des zu identifizierenden Fahrzeugs, umfassen. Die mindestens eine Fahrzeugantwort kann die fahrzeugseitigen Daten und/oder die Nachricht sein oder umfassen.

Es ist möglich, dass die mindestens eine Anfrage vorformuliert und an ein vorbestimmtes Steuergerät des zu identifizierenden Fahrzeugs gesendet wird. Dadurch können eine gezielte Anfrage an und dann eine entsprechende gezielte Fahrzeugantwort von dem Steuergerät des zu identifizierenden Fahrzeugs erwartet werden. Zum Beispiel kann eine Anfrage an ein fahrzeugseitiges Steuergerät gesendet werden, um festzustellen, ob das fahrzeugseitige Steuergerät Werte für "Tankfüllstand" unterstützt. Die erwartete Fahrzeugantwort kann eine positive Feststellung (z. B. Unterstützung für "Tankfüllstand" oder "Sitzheizung") oder eine negative Feststellung (z. B. keine Unterstützung für "Tankfüllstand" oder "Sitzheizung") sein. Bei der positiven Feststellung kann zusätzlich die Art und Weise des Tankfüllstands bzw. der Sitzheizung angegeben werden.

Der Schritt des Empfangens mindestens einer Fahrzeugantwort kann beispielsweise so ausgelegt werden, dass die mindestens eine Fahrzeugantwort von dem zu identifizierenden Fahrzeug, insbesondere dem mindestens einen fahrzeugseitigen Steuergerät des zu identifizierenden Fahrzeugs, direkt von der Fahrzeugdiagnosevorrichtung empfangen wird. Zu diesem Zweck kann die Fahrzeugdiagnosevorrichtung eine Sende- und Empfangseinheit aufweisen.

Alternativ können ein indirektes Senden mindestens einer Anfrage und ein indirektes Empfangen mindestens einer Fahrzeugantwort über ein mobiles Endgerät oder eine Cloud erfolgen, das oder die mit der oben beschriebenen Fahrzeugdiagnosevorrichtung in Verbindung steht. Hierbei kann die Fahrzeugdiagnosevorrichtung die mindestens eine Anfrage von der mit der Fahrzeugdiagnosevorrichtung angebundenen Cloud (bzw. von dem mobilen Endgerät) empfangen und die empfangene Anfrage an das zu identifizierende Fahrzeug, insbesondere an das mindestens eine fahrzeugseitige Steuergerät des zu identifizierenden Fahrzeugs, senden. Die mindestens eine Anfrage kann in der Cloud bzw. dem mobilen Endgerät gespeichert werden. Danach kann die Fahrzeugdiagnosevorrichtung die mindestens eine Fahrzeugantwort von dem zu identifizierenden Fahrzeug, insbesondere dem mindestens einen fahrzeugseitigen Steuergerät des zu identifizierenden Fahrzeugs, empfangen, und die empfangene Fahrzeugantwort an die Cloud bzw. das mobile Endgerät senden. In diesem Fall kann die Fahrzeugdiagnosevorrichtung als Vermittler zwischen dem zu identifizierenden Fahrzeug, insbesondere dem mindestens einen fahrzeugseitigen Steuergerät des zu identifizierenden Fahrzeugs, und der Cloud bzw. dem mobilen Endgerät fungieren.

Vorzugsweise kann der oben beschriebene Anfrage-Antwort-Mechanismus iterativ ausgeführt werden. Die Iteration kann z. B. beendet werden, bis eine vorbestimmte Anzahl von Iterationen bzw. Fahrzeugantworten erreicht wird. So können der Schritt des Sendens und der Schritt des Empfangens mehrfach iterativ ausgeführt werden, bis eine vorbestimmte Anzahl von Iterationen erreicht wird. Insbesondere vorzugsweise kann die Iteration beendet werden, wenn das Fahrzeug mit einer vorgegebenen Genauigkeit identifiziert werden kann. Bei jeder Iteration kann mindestens eine Anfrage an ein anderes Steuergerät des zu identifizierenden Fahrzeugs gesendet werden und eine entsprechende Fahrzeugantwort von dem anderen Steuergerät des zu identifizierenden Fahrzeugs empfangen werden.

Insbesondere kann der Anfrage-Antwort-Mechanismus wie ein Entscheidungsbaum funktionieren. Die Fahrzeugdiagnosevorrichtung kann als Wurzelknoten betrachtet werden. Die jegliche Anfrage an ein Steuergerät kann als ein innerer Knoten des Entscheidungsbaums betrachtet werden. Je nach Art und Weise der Fahrzeugantwort von dem Steuergerät kann der innere Knoten in eine Mehrzahl von Blättern, z. B. zwei Blätter, unterteilt werden.

In einem Beispiel kann ein erstes Blatt eines inneren Knotens des Entscheidungsbaums andeuten, dass eine Fahrzeugantwort von dem Steuergerät positiv ist und das Steuergerät z.B. eine bestimmte Funktion wie den Tankfüllstand unterstützt, während ein zweites Blatt des inneren Knotens andeuten kann, dass eine Fahrzeugantwort von dem Steuergerät negativ ist und das Steuergerät eine bestimmte Funktion wie den Tankfüllstand nicht unterstützt.

Zusätzlich oder alternativ kann ein erstes Blatt eines inneren Knotens im Entscheidungsbaum andeuten, dass das angefragte Steuergerät im zu identifizierenden Fahrzeug vorhanden ist, während ein zweites Blatt des inneren Knotens andeuten kann, dass das zu identifizierende Fahrzeug ein solches Steuergerät nicht hat.

Die Anzahl der inneren Knoten kann gleich der Anzahl der Steuergeräte oder geringer als die Anzahl der Steuergeräte des zu identifizierenden Fahrzeugs sein.

Unter dem anderen Steuergerät des zu identifizierenden Fahrzeugs handelt es sich um ein Steuergerät, das nicht mit dem Steuergerät einer früheren Iteration und/oder einer nachfolgenden Iteration identisch ist. Darüber hinaus kann es sich bei dem anderen Steuergerät um ein funktionsähnliches Steuergerät einer früheren Iteration und/oder einer nachfolgenden Iteration oder um ein nicht ähnliches Steuergerät einer früheren Iteration und/oder einer nachfolgenden Iteration handeln. In dem letzten Fall kann die Mehrzahl der Anfragen an die Steuergeräte des zu identifizierenden Fahrzeugs möglichst vielfältig und unterschiedlich voneinander sein. So können beispielsweise in einer Iteration eine Anfrage an ein Steuergerät für Tankfüllstand und in einer anderen Iteration eine Anfrage an ein anderes Steuergerät für Beleuchtung gesendet werden. Dies ist besonders vorteilhaft, wenn eine einzige Fahrzeugantwort nicht ausreicht, das Fahrzeug zu identifizieren, insbesondere genau, eindeutig und zweifelfrei zu identifizieren. Durch Analysen bzw. Auswerten der Mehrzahl der vielfältigen und unterschiedlichen Fahrzeugantworten können die Genauigkeit und Zuverlässigkeit der Fahrzeugidentifizierung deutlich erhöht werden.

Einige Steuergeräte sind nur in bestimmten Fahrzeugmodellen vorhanden, z. B. Steuergeräte für Fahrzeuge einem Schiebedach und/oder Steuergeräte für Fahrzeuge mit einem Elektromotor. Die Fahrzeugdiagnosevorrichtung kann eine Anfrage über ein Vorhandensein eines solchen Steuergeräts an das zu identifizierende Fahrzeug senden. Wenn das zu identifizierende Fahrzeug ein solches Steuergerät hat, kann das Steuergerät eine Fahrzeugantwort, die z. B. sein Vorhandensein des Steuergeräts bestätigt, an die Fahrzeugdiagnosevorrichtung senden. Wenn das zu identifizierende Fahrzeug ein solches Steuergerät nicht hat, empfängt die Fahrzeugdiagnosevorrichtung keine bestätigende Fahrzeugantwort. In diesem Fall kann stattdessen das zu identifizierende Fahrzeug eine negative Fahrzeugantwort, z. B. "Steuergerät nicht gefunden", an die Fahrzeugdiagnosevorrichtung senden. Je nach der Art der empfangenen Fahrzeugantwort, z. B. Vorhandensein oder Nichtvorhandensein eines bestimmten Steuergeräts, kann ein entsprechendes Fahrzeugmodel oder eine bestimmte Ausstattung des zu identifizierenden Fahrzeugs festgestellt oder ausgeschlossen werden.

Es ist ferner möglich, aus der mindestens einen Fahrzeugantwort mindestens ein Kommunikationsparameter des zu identifizierenden Fahrzeugs, insbesondere des mindestens einen fahrzeugseitigen Steuergeräts des zu identifizierenden Fahrzeugs, zu extrahieren. Der mindestens eine Kommunikationsparameter kann wie oben beschrieben das mindestens eine erste Fahrzeugidentifikationsmerkmal sein oder das mindestens eine erste Fahrzeugidentifikationsmerkmal umfassen.

Es sei angemerkt, dass der mindestens eine Kommunikationsparameter des zu identifizierenden Fahrzeugs, insbesondere des mindestens einen fahrzeugseitigen Steuergeräts des zu identifizierenden Fahrzeugs, auch aus einer negativen Fahrzeugantwort extrahiert werden kann. Wenn das fahrzeugseitige Steuergerät im oben beschriebenen Beispiel keinen Wert für "Tankfüllstand" unterstützt und/oder wenn ein bestimmtes Steuergerät, z. B. für Schiebedach und/oder Elektromotor, im zu identifizierenden Fahrzeug nicht vorhanden ist, kann hier auch ein entsprechender Kommunikationsparameter extrahiert werden.

Zusätzlich oder alternativ kann der mindestens eine Kommunikationsparameter indikativ für eine im Fahrzeug verwendete Kommunikation wie Kommunikationsprotokoll, eine im Fahrzeug verwendete Bus-Topologie und/oder im Fahrzeug verwendete physikalische Kommunikationswerte sein. Der Begriff "im Fahrzeug verwendet" kann sich hierbei auf das komplette Fahrzeug oder auf einzelne Steuergeräte beziehen, insbesondere wenn die Kommunikationsparameter der einzelnen Steuergeräte voneinander abweichen.

Als Bus-Topologie können beispielsweise Belegungen einer Fahrzeugdiagnosevorrichtung bzw. einer Fahrzeugdiagnoseschnittstelle, z. B. Belegungen von OBD-Pins, verwendet werden. Wenn z. B. Pin 1 des OBD Buchse-Steckers belegt ist, so ist dies ein Hinweis, dass es sich um ein US-Fahrzeug handelt. Sind z. B. Pins 3 und 11 des OBD Buchse-Steckers belegt, kann dies auf einen anderen Fahrzeughersteller hinweisen.

Als physikalische Kommunikationswerte können z. B. Spannung, Datengeschwindigkeit wie Baudrate und/oder Datenübertragungszeit verwendet werden. Insbesondere können die physikalischen Kommunikationswerte in Kombination mit der Bus-Topologie verwendet werden. Je nachdem, welches Spannungssignal an welchem Pin des OBD Buchse-Steckers anliegt, kann dies weitere Informationen über das zu identifizierende Fahrzeug liefern.

In einer bevorzugten Ausführungsform kann das Verfahren den weiteren Schritt des Vergleichens der empfangenen fahrzeugseitigen Daten und/oder der empfangenen Nachricht mit mindestens einem vorgegebenen Datensatz umfassen. Das mindestens eine erste Fahrzeugidentifikationsmerkmal kann basierend auf dem Vergleich der empfangenen fahrzeugseitigen Daten und/oder der empfangenen Nachricht mit dem mindestens einen vorgegebenen Datensatz bestimmbar sein.

Optional kann der mindestens eine vorgegebene Datensatz einen genormten Datensatz, einen fahrzeugspezifischen nicht-genormten Datensatz und/oder einen OBD-Diagnosesatz umfassen. Hierbei können ein genormter Datensatz beispielsweise eine ECU-Identifikationsabfrage nach fahrzeugherstellerspezifischer Kommunikationsnorm und/oder ein OBD-Diagnosesatz beispielsweise eine OBD-Norm ISO 15031 sein. Der nicht-genormte Datensatz kann hierbei von verschiedenen Parametern abhängen und mit einer Vielzahl von nicht-genormten Datensätzen von verschiedenen Fahrzeugen verglichen werden. Der mindestens eine vorgegebene Datensatz kann lokal in der Fahrzeugdiagnosevorrichtung gespeichert werden. Alternativ kann der mindestens eine vorgegebene Datensatz in der Cloud gespeichert werden.

Nachdem das Fahrzeug identifiziert wurde, kann das Verfahren den weiteren Schritt des Bereitstellens von Fahrzeug-Identifizierenden-Beschreibungsdaten umfassen. Die bereitgestellten Fahrzeug-Identifizierenden-Beschreibungsdaten dienen dazu, notwendige fahrzeugbezogene Informationen für eine anschließende Fahrzeugdiagnose zu sammeln.

Mit der Erfindung wird darüber hinaus ein Verfahren zum Durchführen einer Fahrzeugdiagnose angegeben. Das Verfahren zum Durchführen einer Fahrzeugdiagnose umfasst das oben beschriebene Verfahren zum Identifizieren eines Fahrzeugs. Des Weiteren umfasst das Verfahren den Schritt des Durchführens einer Fahrzeugdiagnose an dem identifizierten Fahrzeug.

Unter dem Begriff "Fahrzeugdiagnose" ist nicht notwendigerweise eine vollständige Diagnose aller vorliegenden Fehlercodes gemeint. Vielmehr kann sich die Fahrzeugdiagnose auf einzelne Steuergeräte bzw. deren Fehlercodes, zum Beispiel einzelne durch einen Benutzer selektierte Steuergeräte, beschränken. Mithilfe der Diagnose können elektronische, hydraulische, pneumatische, elektrische und/oder mechanische Fehlfunktionen usw. identifiziert werden. Nach dem Durchführen einer Fahrzeugdiagnose können ein Diagnoseergebnis und/oder eine Handlungsempfehlung ausgebeben werden.

Gemäß einem weiteren Aspekt wird eine Vorrichtung zum Durchführen des oben beschriebenen Verfahrens angegeben. Die Vorrichtung kann z. B. als eine Fahrzeugdiagnosevorrichtung ausgestaltet sein. Die Vorrichtung ist in der Regel eine externe Vorrichtung, welche nicht Bestandteil des Fahrzeuges, aber verbindbar mit dem Fahrzeug ist. Die Fahrzeugdiagnosevorrichtung kann ein dediziertes Fahrzeugdiagnosegerät und/oder ein mobiles Endgerät mit einer optionalen Mobilfunkfunktion und/oder ein OBD-Dongle und/oder eine Cloud außerhalb des Fahrzeugs sein oder umfassen. Insbesondere kann die Vorrichtung als einzelne der oben beschriebenen Einheiten oder als Kombination einiger oder aller der oben beschriebenen Einheiten, die zusammen ein System bilden, ausgebildet sein. Durch die Verwendung einer bereits vorhandenen Fahrzeugdiagnosevorrichtung können die oben beschriebenen Verfahren kostengünstig durchgeführt werden.

Gemäß einem weiteren Aspekt wird ein Computerprogramm mit Programmcodemitteln bereitgestellt. Das Computerprogramm ist dazu eingerichtet, das oben beschriebene Verfahren auszuführen, wenn das Computerprogramm auf einer Recheneinheit, insbesondere einer Recheneinheit in der oben beschriebenen Vorrichtung, ausgeführt wird.

Gemäß einem weiteren Aspekt wird außerdem ein maschinenlesbares Speichermedium mit dem darauf gespeicherten Computerprogramm angegeben.

Im Folgenden wird die Erfindung ohne Beschränkung des allgemeinen Erfindungsgedankens anhand von Ausführungsbeispielen und unter Bezugnahme auf die Figuren näher erläutert. Gleiche Bezugszeichen kennzeichnen dabei gleiche oder entsprechende Merkmale. Die Merkmale können auch unabhängig vom konkreten Beispiel realisiert sein und zwischen den Beispielen kombiniert werden. Es zeigt:
Fig. 1 eine schematische Darstellung eines Fahrzeuges und einer mit dem Fahrzeug verbundenen Fahrzeugdiagnosevorrichtung;
Fig. 2 eine schematische Darstellung des Fahrzeuges und der Fahrzeugdiagnosevorrichtung nach Fig. 1, sowie einer mit der Fahrzeugdiagnosevorrichtung angebundenen Cloud;
Fig. 3 eine schematische Darstellung eines Verfahrens zum Identifizieren des Fahrzeugs und zum Durchführen einer Diagnose an dem Fahrzeug mithilfe der Fahrzeugdiagnosevorrichtung nach Fig. 1; und
Fig. 4 eine schematische Darstellung eines Verfahrens zum Identifizieren des Fahrzeugs und zum Durchführen einer Diagnose an dem Fahrzeug mithilfe der Fahrzeugdiagnosevorrichtung sowie der Cloud nach Fig. 2.

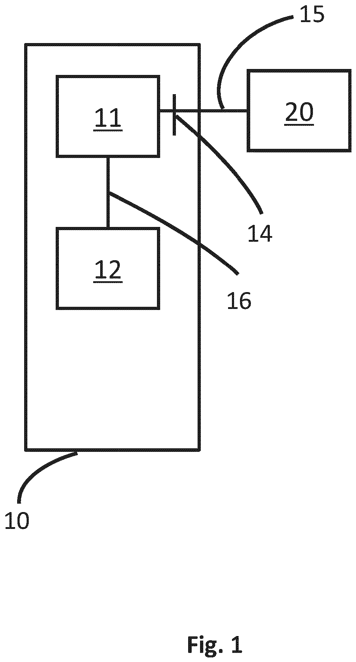

Fig. 1 zeigt schematisch Darstellung eines Fahrzeuges 10 und einer mit dem Fahrzeug 10 verbundenen Fahrzeugdiagnosevorrichtung 20.

Bei dem Fahrzeug 10 kann es sich zum Beispiel um einen Personenkraftwagen, ein Motorrad, einen Lastkraftwagen oder Ähnliches handeln. Das Fahrzeug 10 weist eine Vielzahl von Steuergeräten 11, 12 auf, z. B. mindestens 10 oder mehr Steuergeräte. Viele der oder sämtliche Steuergeräte 11, 12 sind jeweils mindestens einer Fahrzeugkomponente zugeordnet. Die zunehmende Vernetzung von Steuergeräten 11, 12 in heutigen Fahrzeugen bietet immer bessere Einwirkungsmöglichkeiten auf Funktionalitäten im Fahrzeug 10, z.B. bessere Diagnosemöglichkeiten im Fehlerfall oder Möglichkeiten zur Fernbedienung von Fahrzeugkomponenten und/oder Funktionen des Fahrzeugs 10. Hierbei kann das Steuergerät 11 in Fig. 1 repräsentativ für eine erste Gruppe von Steuergeräten 11 sein, während das Steuergerät 12 in Fig. 1 repräsentativ für eine zweite Gruppe von Steuergeräten 12 sein kann.

Die Steuergeräte 11, 12 sind üblicherweise jeweils mit mindestens einem oder einer Vielzahl von Sensoren (nicht gezeigt) verbunden, die während des Betriebs des Fahrzeuges 10 Messwerte oder Betriebsparameter erfassen. Denkbare Sensormessgrößen umfassen beispielsweise eine Kühlmitteltemperatur, eine Motortemperatur, eine Öltemperatur, eine Fahrzeuggeschwindigkeit, eine Motordrehzahl, ein Motordrehmoment, eine Umgebungstemperatur (Außentemperatur), einen Umgebungsluftdruck, einen Ladedruck eines Abgasturboladers des Antriebsmotors, einen eingelegten Gang eines Getriebes des Fahrzeugs 10, einen elektrischen Strom, eine elektrische Spannung, und einen elektrischen Widerstand usw. Falls ein durch einen Sensor gemessener Messwert einen bestimmten Sollwertbereich je nach Sensorgröße unter- oder überschreitet, erzeugt das entsprechende Steuergerät 11, 12 einen Fehlercode, der üblicherweise in einem Speicher des jeweiligen Steuergeräts 11, 12 gespeichert wird. Der Fehlercode ist einem Fehlerzustand zugeordnet und beinhaltet beispielsweise eine Kennziffer zur Identifikation von Fehlfunktionen, die während des Betriebs des Fahrzeugs 10 auftreten können. Der Fehlercode wird auch als Diagnosefehlercode oder Diagnostic Trouble Code (DTC) bezeichnet.

Üblicherweise sind die Steuergeräte 11, 12 direkt oder zumindest indirekt, z. B. über ein Fahrzeugbussystem 16, wie ein CAN-Bussystem, mit einer Fahrzeugdiagnoseschnittstelle 14 verbunden. In manchen Ausführungsformen sind die Steuergeräte 11, 12 für den Empfang und das Senden von Daten über das Fahrzeugbussystem 16 innerhalb des Fahrzeuges 10 konfiguriert. Das Steuergerät 11 kann zum Beispiel für die Gewährleistung von Sicherheitsfunktionen zuständig sein. Beispielhafte Steuergeräte 11 umfassen ein Bordnetzsteuergerät und/oder ein Gateway. Je nach Hersteller sind das Gateway und/oder das Bordnetzsteuergerät im Fahrzeug 10 vorhanden und bilden zusammen mit der Diagnoseschnittstelle 14 eine Kommunikationsbrücke zwischen dem Fahrzeug 10 und der Fahrzeugdiagnosevorrichtung 20. Das Gateway ist hierbei als Kommunikationsvorrichtung im Fahrzeug 10 ausgestaltet und ermöglicht eine Kommunikation des Fahrzeuges 10 mit der Außenwelt über die Diagnoseschnittstelle 14. Insbesondere ist das Gateway eingerichtet, mit der Fahrzeugdiagnosevorrichtung 20 Daten auszutauschen bzw. zu kommunizieren. Das Gateway kann somit als Datenverteiler für die Kommunikation innerhalb des Fahrzeuges 10 und über die Kommunikationsschnittstelle 14 mit der Außenwelt agieren. Oftmals unterstützt das Gateway unterschiedliche Fahrzeugbussysteme 16 wie Ethernet, CAN, LIN und kann beispielsweise mit einem zusätzlichen Diagnosebussystem verbunden sein. Das Diagnosebussystem kann Bestandteil des Fahrzeugbussystems 16 sein oder zusätzlich zum Fahrzeugbussystem 16 vorliegen und über das Gateway mit dem Fahrzeugbussystem 16 verbunden sein. Als Bordnetzsteuergerät oder abgekürzt BSG, im Englischen Body Control Module (BCM), bezeichnet man ein oder auch mehrere Steuergeräte 11, 12 im Fahrzeug 10, die unmittelbar elektrische Verbraucher bzw. Teilnehmer am Bordnetz (wie beispielsweise Beleuchtung oder Scheibenwaschanlage) steuern, Daten der Fahrzeugbussysteme 16 (LIN, CAN, Flexray) verarbeiten und/oder auch als Gateway für Diagnosedienste fungieren. Komfortfunktionen wie Sitzheizung oder Ambientelicht werden üblicherweise ebenfalls vom BSG bedient.

Üblicherweise kann die Fahrzeugdiagnosevorrichtung 20 mittels Signalleitungen 15 (also drahtgebunden) an die Fahrzeugdiagnoseschnittstelle 14 des Fahrzeuges 10 angeschlossen werden, und somit mit dem CAN-Bussystem 16 und den Steuergeräten 11, 12 in Verbindung stehen. Zum Beispiel weist die Fahrzeugdiagnosevorrichtung 20 einen Stecker auf, der mit der Fahrzeugdiagnoseschnittstelle 14 kompatibel ist und in diese eingesteckt werden kann. Beim Verbinden des Steckers mit der Fahrzeugdiagnoseschnittstelle 14 werden die beiden elektrisch und mechanisch miteinander verbunden. Der Stecker kann direkt an einem Gehäuse der Fahrzeugdiagnosevorrichtung 20 vorgesehen sein, beispielsweise im Falle eines Dongles/Sticks. Alternativ kann der Stecker auch mittels eines Verlängerungskabels mit weiteren Komponenten der Fahrzeugdiagnosevorrichtung 20 verbunden sein, zum Beispiel im Falle einer dedizierten Fahrzeugdiagnosevorrichtung. Zusätzlich oder alternativ kann eine drahtlose Kommunikationsverbindung der Fahrzeugdiagnosevorrichtung 20 mit dem Fahrzeug 10 und den Steuergeräten 11, 12 möglich sein, zum Beispiel eine Drahtlos-Nahverbindung wie Bluetooth oder WiFi/WLAN.

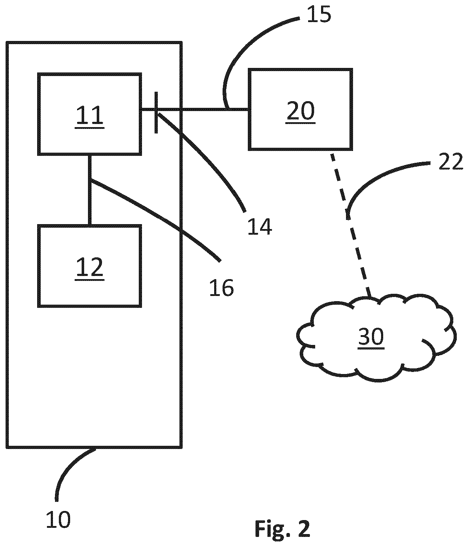

Die Fahrzeugdiagnosevorrichtung 20 kann als einzelne Vorrichtung verstanden werden. Alternativ kann die Fahrzeugdiagnosevorrichtung 20 ein Fahrzeugdiagnosegerät und/oder ein mobiles Endgerät vorzugsweise mit einer Mobilfunkfunktion und/oder ein OBD-Dongle umfassen. Wenn die Fahrzeugdiagnosevorrichtung 20 aus einer Kombination einiger oder aller der oben beschriebenen Einheiten besteht, so bildet die Fahrzeugdiagnosevorrichtung 20 zusammen mit den anderen Einheiten ein Fahrzeugdiagnosesystem 20. In manchen Ausführungsformen kann die Fahrzeugdiagnosevorrichtung 20 oder das Fahrzeugdiagnosesystem 20 ausgestaltet sein, eine Kommunikation zwischen dem Fahrzeug 10 und einer externen Cloud 30 nach Fig. 2 zu vermitteln. Der Einfachheit halber repräsentiert im Folgenden die Fahrzeugdiagnosevorrichtung 20 sowohl die einzelne Fahrzeugdiagnosevorrichtung 20 als auch das Fahrzeugdiagnosesystem 20.

Die in dieser Schrift verwendete Abkürzung OBD steht für "on-board diagnosis". Neben der Kommunikationsfunktion kann die Fahrzeugdiagnosevorrichtung 20 auch weitere Funktionen, wie Bearbeiten, Analysieren und/oder Auswerten der Diagnosedaten oder Generieren von Nachrichten, Befehlen usw., übernehmen. Die Fahrzeugdiagnosevorrichtung 20 kann außerdem ausgestaltet sein, nach außengehende Datenströme der Steuergeräten 11, 12 zu verarbeiten.

Die Fahrzeugdiagnosevorrichtung 20 ist kein Bestandteil des Fahrzeugs 10 und umfasst typischerweise eine Steuer- und Verarbeitungseinheit, einen Speicher, sowie zumindest eine Sende- und Empfangseinheit. Manchmal kann die Fahrzeugdiagnosevorrichtung 20 eine erste Sende- und Empfangseinheit und eine zweite Sende- und Empfangseinheit aufweisen, welche einerseits für die Kommunikation bzw. Datenstrom zum Fahrzeug 10 hin bzw. andererseits für die Kommunikation bzw. Datenstrom aus dem Fahrzeug 10 heraus vorgesehen sind. Weiter kann die Fahrzeugdiagnosevorrichtung 20 einen Prozessor aufweisen, um fahrzeugseitige Daten und/oder Nachricht des Fahrzeugs 10 auszuwerten und/oder aufzubereiten. Über die Sende- und Empfangseinheit der Fahrzeugdiagnosevorrichtung 20 können die fahrzeugseitigen Daten und/oder die Nachricht empfangen werden und anschließend ausgewertet werden.

Fig. 2 zeigt eine schematische Darstellung des Fahrzeuges 10 und der Fahrzeugdiagnosevorrichtung 20 nach Fig. 1, sowie der mit der Fahrzeugdiagnosevorrichtung 20 angebundenen Cloud 30.

Fig. 2 unterscheidet sich von Fig. 1 dadurch, dass die Cloud 30 die Funktionen der Fahrzeugdiagnosevorrichtung 20 wie in Fig. 1 beschrieben zumindest teilweise oder vollständig übernimmt und dass die Fahrzeugdiagnosevorrichtung 20 in Fig. 2 im Wesentlichen als Vermittler für die Kommunikation zwischen dem Fahrzeug 10 und der Cloud 30 dient.

Die Fahrzeugdiagnosevorrichtung 20 und die Cloud 30 können jeweils mindestens eine Sende- und Empfangseinheit aufweisen, um eine Kommunikation miteinander zu ermöglichen. Falls gleiche Kommunikationsprotokolle verwendet werden, kann nur eine Sende- und Empfangseinheit in der Fahrzeugdiagnosevorrichtung 20 vorgesehen sein, welche mit den Steuergeräten 11, 12 des Fahrzeugs 10 einerseits und der Cloud 30 andererseits kommuniziert. Die Sende- und Empfangseinheit der Fahrzeugdiagnosevorrichtung 20 empfängt die fahrzeugseitigen Daten und/oder die Nachricht von dem Fahrzeug 10, insbesondere dem Steuergerät 11, 12 des Fahrzeugs 10, und leitet sie an die Cloud 30 weiter, sodass die Auswertung der fahrzeugseitigen Daten und/oder der Nachricht in der Cloud 30 stattfinden kann.

Die wechselseitige Kommunikation zwischen dem Fahrzeug 10 und der Fahrzeugdiagnosevorrichtung 20 und zwischen der Fahrzeugdiagnosevorrichtung 20 und der Cloud 30 ist mittels Linien in Fig. 2 angedeutet. Hierbei kann die gestrichelte Linie 22 zwischen der Fahrzeugdiagnosevorrichtung 20 und der Cloud 30 bedeuten, dass die Kommunikation drahtlos bzw. über eine Luftschnittstelle erfolgt, während die durchgezogene Linie 15 zwischen dem Fahrzeug 10 und der Fahrzeugdiagnosevorrichtung 20 auf eine drahtgebundene Kommunikation hinweisen. Statt drahtloser Kommunikation kann auch drahtgebundene Kommunikation stattfinden und andersherum.

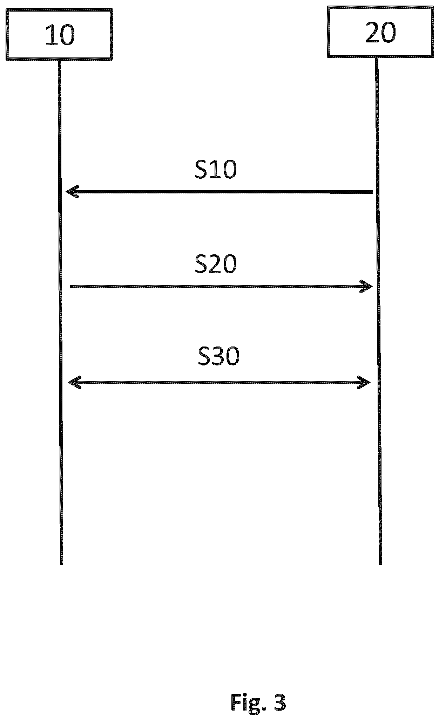

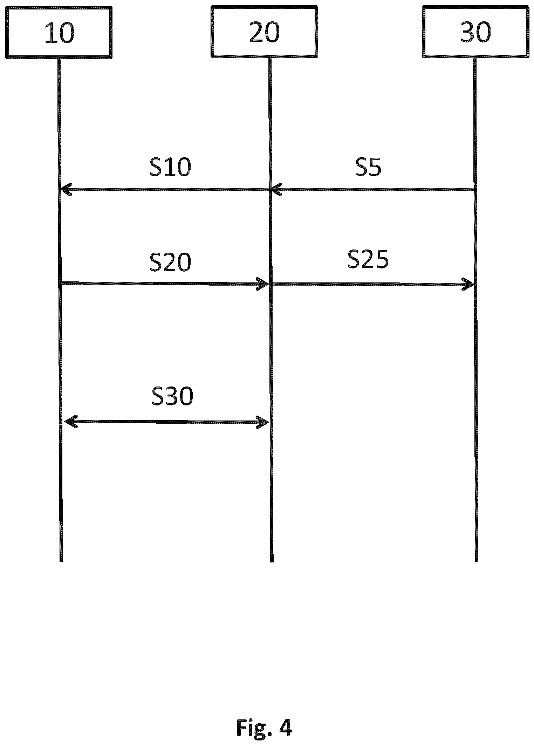

Das Verfahren zum Identifizieren des Fahrzeugs 10 und zum Durchführen einer Fahrzeugdiagnose an dem Fahrzeug 10 kann in der Werkstatt z. B. zu Inspektion des Fahrzeugs, oder an einem anderen Ort, wo das Fahrzeug z. B. eine Panne hat, durchgeführt werden. Andere Orte sind selbstredend auch denkbar. Nachstehend werden die einzelnen Schritte des Verfahrens anhand der Figuren 3 und 4 näher erläutert.

Fig. 3 zeigt eine schematische Darstellung eines Verfahrens zum Identifizieren des Fahrzeugs 10 und zum Durchführen einer Fahrzeugdiagnose an dem Fahrzeug 10 mithilfe der Fahrzeugdiagnosevorrichtung 20 nach Fig. 1.

Über die Fahrzeugdiagnoseschnittstelle 14 wird zunächst eine Kommunikationsverbindung 15 zwischen dem Fahrzeug 10 und der Fahrzeugdiagnosevorrichtung 20 hergestellt, z. B. durch Einstecken des Steckers der Fahrzeugdiagnosevorrichtung 20 in die Fahrzeugdiagnoseschnittstelle 14. Die Fahrzeugdiagnosevorrichtung 20 sendet mindestens eine Anfrage an mindestens ein der Steuergeräte 11, 12 des Fahrzeugs 10 durch die Kommunikationsverbindung 15 (S10). Das Senden der mindestens einen Anfrage kann über einen Trigger gestartet werden, z. B. über eine erstmalige Verbindung der Fahrzeugdiagnosevorrichtung 20 mit der Fahrzeugdiagnoseschnittstelle 14.

Es sei angemerkt, dass der Schritt S10 nicht erforderlich ist, wenn die Fahrzeugdiagnosevorrichtung 20 eines der Steuergeräte 11, 12 passiv hört. Unter dem passiven Hören kann eine einseitige Kommunikation verstanden werden, bei welchem die Fahrzeugdiagnosevorrichtung 20 die fahrzeugseitigen Daten und/oder die Nachricht von dem zu identifizierenden Fahrzeug 10, insbesondere einem fahrzeugseitigen Steuergerät 11, 12 des zu identifizierenden Fahrzeugs 10, empfängt, und selbst keine Daten an das zu identifizierende Fahrzeug 10, insbesondere das fahrzeugseitige Steuergerät 11, 12 des zu identifizierenden Fahrzeugs 10, sendet.

Nach Empfangen der mindestens einen Anfrage sendet das mindestens eine der Steuergeräte 11, 12 mindestens eine Fahrzeugantwort, welche die fahrzeugspezifischen Daten und/oder die Nachricht ist oder welche die fahrzeugspezifischen Daten und/oder die Nachricht umfasst, an die Fahrzeugdiagnosevorrichtung 20, die die Fahrzeugantwort empfängt (S20). Die fahrzeugseitigen Daten und/oder die Nachricht können fahrzeugbezogene Informationen, z. B. Fehlercodes, Fahrzeugsensormesswerte, Steuergeräteeinstellungen, Steuergeräteinformation und/oder Betriebsparameter des Steuergerätes usw. umfassen.

Die Schritte des Sendens und des Empfangens können insbesondere iterativ stattfinden. Zum Beispiel sendet die Fahrzeugdiagnosevorrichtung 20 in einer ersten Iteration eine Anfrage an das Steuergerät 11 und empfängt eine Fahrzeugantwort von dem Steuergerät 11. In einer zweiten Iteration sendet die Fahrzeugdiagnosevorrichtung 20 eine Anfrage an das Steuergerät 12 und empfängt eine Fahrzeugantwort von dem Steuergerät 12. Die Iteration kann beendet werden, bis die Fahrzeugdiagnosevorrichtung 20 das Fahrzeug 10 zweifelfrei, eindeutig und genau identifizieren kann. Beim passiven Hören kann der Schritt des Empfangens iterativ durchgeführt werden.

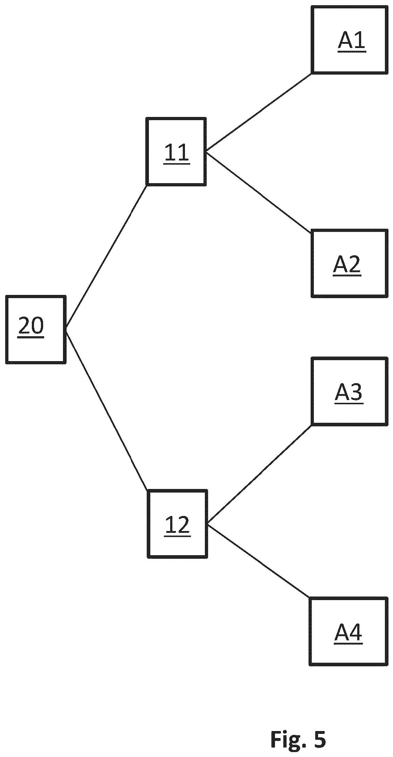

Insbesondere können die Schritte des Sendens und des Empfangens wie in dem in Fig. 5 dargestellten Entscheidungsbaum funktionieren.

Der Entscheidungsbaum zeigt einen Wurzelknoten, der die Fahrzeugdiagnosevorrichtung 20 nach Fig. 1 oder nach Fig. 2 darstellt. Die Fahrzeugdiagnosevorrichtung 20 sendet eine Anfrage an das Steuergerät 11 und eine Anfrage an das Steuergerät 12. Die Steuergeräte 11, 12 sind jeweils als innere Knoten des Entscheidungsbaums dargestellt. Daraufhin kann das Steuergerät 11 eine Fahrzeugantwort an die Fahrzeugdiagnosevorrichtung 20 senden, die die Fahrzeugantwort empfängt. Die Fahrzeugantwort von dem Steuergerät 11 kann z. B. eine positive Fahrzeugantwort A1 oder eine negative Fahrzeugantwort A2 sein. Die positive Fahrzeugantwort A1 und die negative Fahrzeugantwort A2 können als zwei Blätter des inneren Knotens 11 betrachtet werden. In ähnlicher Weise kann das Steuergerät 12 eine Fahrzeugantwort an die Fahrzeugdiagnosevorrichtung 20 senden, die die Fahrzeugantwort empfängt. Die Fahrzeugantwort von dem Steuergerät 12 kann z. B. eine positive Fahrzeugantwort A3 oder eine negative Fahrzeugantwort A4 sein. Die positive Fahrzeugantwort A3 und die negative Fahrzeugantwort A4 können auch als zwei Blätter des inneren Knotens 12 betrachtet werden.

Unabhängig von Fig. 5 kann der Entscheidungsbaum mehr als zwei innere Knoten umfassen und/oder jeder innere Knoten des Entscheidungsbaums kann mehr als zwei Blätter umfassen. In dem vorherigen Fall kann die Fahrzeugdiagnosevorrichtung 20 die Anfragen an mehr als zwei Steuergeräte 11, 12, z. B. 10 Steuergeräte oder alle Steuergeräte des Fahrzeugs 10 senden. In dem letzten Fall kann die Fahrzeugantwort eines angefragten Steuergeräts zusätzlich zu der positiven Feststellung (z. B. Unterstützung für "Tankfüllstand" oder Vorhandensein des Steuergeräts) und der negativen Feststellung (z. B. Keine Unterstützung für "Tankfüllstand" oder Kein Vorhandensein des Steuergeräts) andere Informationen über das Steuergerät an die Fahrzeugdiagnosevorrichtung 20 senden.

Aus den empfangenen fahrzeugseitigen Daten und/oder der empfangenen Nachricht kann die Fahrzeugdiagnosevorrichtung 20 mindestens einen Kommunikationsparameter des mindestens einen Steuergeräts 11, 12 extrahieren. Der mindestens eine Kommunikationsparameter umfasst oder ist mindestens ein erstes Fahrzeugidentifikationsmerkmal, welches ein anderes Fahrzeugidentifikationsmerkmal als eine Fahrzeugidentifizierungsnummer, ein Motorcode, und eine Steuergerätidentifizierungsnummer ist. Zum Beispiel kann der mindestens eine Kommunikationsparameter indikativ für eine im Fahrzeug 10 verwendete Bus-Topologie, ein im Fahrzeug verwendetes Kommunikationsprotokoll und/oder physikalische Kommunikationswerte sein.

Es ist möglich, dass die Fahrzeugdiagnosevorrichtung 20 die empfangenen fahrzeugspezifischen Daten und/oder Nachricht oder den extrahierten mindestens einen Kommunikationsparameter mit mindestens einem vorgegebenen Datensatz, z. B. einem genormten Datensatz, einem nicht-genormten fahrzeugspezifischen Datensatz und/oder einem OBD-Diagnosesatz, der in der Fahrzeugdiagnosevorrichtung 20 oder der Cloud 30 gespeichert ist, vergleicht. Basierend auf dem Vergleich kann die Fahrzeugdiagnosevorrichtung 20 das erste Fahrzeugidentifikationsmerkmal bestimmen.

Mittels des mindestens einen ersten Fahrzeugidentifikationsmerkmals kann die Fahrzeugdiagnosevorrichtung 20 einen Fahrzeughersteller und/oder ein Fahrzeugmodell und/oder einen Fahrzeugtyp und/oder einen Namen eines Steuergeräts 11, 12 des Fahrzeugs 10 und/oder eine Fahrzeugausstattung und/oder eine Anzahl von Türen des Fahrzeugs 10 und/oder eine Antriebsart des Fahrzeugs 10 und/oder ein Ausstattungsassistenzsystem des Fahrzeugs 10 feststellen. Die Fahrzeugdiagnosevorrichtung 20 kann somit die festgestellten fahrzeugbezogenen Informationen verwenden, um das Fahrzeug 10 genau zu identifizieren.

Manchmal verwendet die Fahrzeugdiagnosevorrichtung 20 zusätzlich ein zweites Fahrzeugidentifikationsmerkmal. Das zweite Fahrzeugidentifikationsmerkmal kann z. B. eine Fahrzeugidentifizierungsnummer und/oder einen Motorcode und/oder eine Steuergerätidentifizierungsnummer umfassen. Das erste Fahrzeugidentifikationsmerkmal wird oft als Ergänzung zu dem zweiten Fahrzeugidentifikationsmerkmal zur Identifizierung des Fahrzeugs 10 verwendet (oder andersherum). Zusätzlich oder alternativ kann das erste Fahrzeugidentifikationsmerkmal zur Überprüfung bzw. Kontrolle verwendet werden (oder andersherum), um sicherzustellen, dass die Identifizierung des Fahrzeugs 10 mithilfe des zweiten Fahrzeugidentifikationsmerkmals richtig ist.

Nach der Identifizierung des Fahrzeugs 10 stellt die Fahrzeugdiagnosevorrichtung 20 Fahrzeug-Identifizierenden-Beschreibungsdaten bereits und führt anhand der bereitgestellten Fahrzeug-Identifizierenden-Beschreibungsdaten eine Fahrzeugdiagnose an dem identifizierten Fahrzeug 10 durch (S30). Die Fahrzeugdiagnose S30 kann auf die angefragten Steuergeräte 11, 12 beschränkt werden. Mithilfe der Fahrzeugdiagnose können elektronische, hydraulische, pneumatische, elektrische aber auch mechanische Fehlfunktionen usw. identifiziert werden. Nach dem Durchführen der Fahrzeugdiagnose S30 können ein Diagnoseergebnis und/oder eine Handlungsempfehlung ausgebeben werden.

Fig. 4 zeigt eine schematische Darstellung eines Verfahrens zum Identifizieren des Fahrzeugs 10 und zum Durchführen einer Fahrzeugdiagnose an dem Fahrzeug 10 mithilfe der Fahrzeugdiagnosevorrichtung 20 sowie der Cloud 30 nach Fig. 2.

Über die drahtlose Kommunikation bzw. über die Luftschnittstelle 22 sendet die Cloud 30 mindestens eine Anfrage an die Fahrzeugdiagnosevorrichtung 20, welche die mindestens eine Anfrage empfängt (S5) und die empfangene mindestens eine Anfrage an mindestens ein der Steuergeräte 11, 12 des Fahrzeugs 10 sendet bzw. weiterleitet (S10).

Es sei angemerkt, dass der Schritt S5 und der Schritt S10 nicht erforderlich sind, wenn die Steuergeräte 11, 12 wie oben beschrieben passiv gehört werden.

Das mindestens eine der Steuergeräte 11, 12 empfängt die mindestens eine Anfrage (S10) und sendet die Fahrzeugantwort, die die fahrzeugspezifischen Daten und/oder die Nachricht ist oder umfasst, an die Fahrzeugdiagnosevorrichtung 20. Die Fahrzeugdiagnosevorrichtung 20 empfängt die Fahrzeugantwort (S20) und leitet sie an die Cloud 30 weiter, die die Fahrzeugantwort empfängt (S25). Die fahrzeugseitigen Daten und/oder die Nachricht umfassen mindestens ein erstes Fahrzeugidentifikationsmerkmal, welches ein anderes Fahrzeugidentifikationsmerkmal als eine Fahrzeugidentifizierungsnummer, ein Motorcode, und eine Steuergerätidentifizierungsnummer ist.

Das Verfahren nach Fig. 4 unterscheidet sich von dem Verfahren nach Fig. 3 dadurch, dass die Fahrzeugdiagnosevorrichtung 20 in Fig. 4 im Wesentlichen als Vermittler zwischen dem Fahrzeug 10 und der Cloud 30 dient, und dass die Cloud 30 die Funktionen der Fahrzeugdiagnosevorrichtung 20 wie in Fig. 3 beschrieben zumindest teilweise oder vollständig übernimmt, um das Fahrzeug 10 zu identifizieren.

Nach der Identifizierung des Fahrzeugs 10 stellt die Fahrzeugdiagnosevorrichtung 20 Fahrzeug-Identifizierenden-Beschreibungsdaten bereits und führt anhand der bereitgestellten Fahrzeug-Identifizierenden-Beschreibungsdaten eine Fahrzeugdiagnose an dem identifizierten Fahrzeug 10 durch (S30).

Unabhängig von Fig. 4 kann die Fahrzeugdiagnose an dem identifizierten Fahrzeug 10 alternativ von der Cloud 30 über die Fahrzeugdiagnosevorrichtung 20 durchgeführt werden.

Ein Computerprogramm mit Programmcodemitteln kann derart eingerichtet sein, das oben beschriebene Verfahren nach Fig. 3 oder Fig. 4 auszuführen.

Hierzu kann das Computerprogramm in einem maschinelesbaren Speichermedium gespeichert sein.

### Bezugszeichenliste

- 10: Fahrzeug
- 11: Fahrzeugsteuergerät
- 12: Fahrzeugsteuergerät
- 14: Fahrzeugdiagnoseschnittstelle
- 15: Signalleitungen
- 16: Fahrzeugbussystem
- 20: Fahrzeugdiagnosevorrichtung
- 22: Drahtlose Kommunikationsverbindung
- 30: Cloud
- A1: positive Fahrzeugantwort des Fahrzeugsteuergeräts 11
- A2: negative Fahrzeugantwort des Fahrzeugsteuergeräts 11
- A3: positive Fahrzeugantwort des Fahrzeugsteuergeräts 12
- A4: negative Fahrzeugantwort des Fahrzeugsteuergeräts 12

## Patentansprüche

1. Verfahren zum Identifizieren eines Fahrzeugs, umfassend die folgenden Schritte:
- Empfangen von fahrzeugseitigen Daten und/oder einer Nachricht von einem zu identifizierenden Fahrzeug, insbesondere über eine Fahrzeugdiagnose-Schnittstelle des zu identifizierenden Fahrzeugs, wobei die fahrzeugseitigen Daten und/oder die Nachricht mindestens ein erstes Fahrzeugidentifikationsmerkmal umfassen; und
- Identifizieren des Fahrzeugs mithilfe des mindestens einen ersten Fahrzeugidentifikationsmerkmals;
wobei das mindestens eine erste Fahrzeugidentifikationsmerkmal ein anderes Fahrzeugidentifikationsmerkmal als eine Fahrzeugidentifizierungsnummer, ein Motorcode, und eine Steuergerätidentifizierungsnummer ist.

2. Verfahren nach Anspruch 1, weiter umfassend den folgenden Schritt:
- Extrahieren aus den empfangenen fahrzeugseitigen Daten und/oder der empfangenen Nachricht mindestens eines Kommunikationsparameters des zu identifizierenden Fahrzeugs, wobei der mindestens eine Kommunikationsparameter das mindestens eine erste Fahrzeugidentifikationsmerkmal ist oder das mindestens eine erste Fahrzeugidentifikationsmerkmal umfasst.

3. Verfahren nach einem der vorhergehenden Ansprüche, umfassend die folgenden Schritte:
- Senden mindestens einer Anfrage an das zu identifizierende Fahrzeug, insbesondere an mindestens ein fahrzeugseitiges Steuergerät des zu identifizierenden Fahrzeugs, und
- Empfangen mindestens einer Fahrzeugantwort von dem zu identifizierenden Fahrzeug, insbesondere von dem mindestens einen fahrzeugseitigen Steuergerät des zu identifizierenden Fahrzeugs, wobei die mindestens eine Fahrzeugantwort die fahrzeugseitigen Daten und/oder die Nachricht ist oder umfasst.

4. Verfahren nach dem vorhergehenden Anspruch, wobei der Schritt des Sendens und der Schritt des Empfangens mehrfach iterativ ausgeführt werden, bis eine vorbestimmte Anzahl von Iterationen erreicht wird.

5. Verfahren nach einem der beiden vorhergehenden Ansprüche, umfassend den folgenden Schritt:
- Extrahieren aus der mindestens einen Fahrzeugantwort mindestens eines Kommunikationsparameters des zu identifizierenden Fahrzeugs, insbesondere des mindestens einen fahrzeugseitigen Steuergeräts des zu identifizierenden Fahrzeugs,
wobei der mindestens eine Kommunikationsparameter das mindestens eine erste Fahrzeugidentifikationsmerkmal ist oder das mindestens eine erste Fahrzeugidentifikationsmerkmal umfasst.

6. Verfahren nach einem der vorhergehenden Ansprüche soweit rückbezogen auf Anspruch 2, 4 oder 5, wobei der mindestens eine Kommunikationsparameter indikativ für eine im Fahrzeug verwendete Kommunikation wie Kommunikationsprotokoll, eine im Fahrzeug verwendete Bus-Topologie und/oder im Fahrzeug verwendete physikalische Kommunikationswerte ist.

7. Verfahren nach einem der vorhergehenden Ansprüche, umfassend den folgenden Schritt:
- Vergleichen der empfangenen fahrzeugseitigen Daten und/oder der empfangenen Nachricht mit mindestens einem vorgegebenen Datensatz,
wobei das mindestens eine erste Fahrzeugidentifikationsmerkmal basierend auf dem Vergleich der empfangenen fahrzeugseitigen Daten und/oder der empfangenen Nachricht mit dem mindestens einen vorgegebenen Datensatz bestimmbar ist.

8. Verfahren nach dem vorhergehenden Anspruch, wobei der mindestens eine vorgegebene Datensatz einen genormten Datensatz, einen fahrzeugspezifischen nicht-genormten Datensatz und/oder einen OBD-Diagnosesatz umfasst.

9. Verfahren nach einem der vorhergehenden Ansprüche, wobei mittels des mindestens einen ersten Fahrzeugidentifikationsmerkmals ein Fahrzeughersteller und/oder ein Fahrzeugmodell und/oder eine Fahrzeugtyp und/oder ein Name eines Steuergeräts des Fahrzeugs und/oder eine Fahrzeugausstattung und/oder eine Anzahl von Türen des Fahrzeugs und/oder eine Antriebsart des Fahrzeugs und/oder ein Ausstattungsassistenzsystem des Fahrzeugs feststellbar sind.

10. Verfahren nach einem der vorhergehenden Ansprüche, wobei beim Identifizieren des Fahrzeugs zusätzlich ein zweites Fahrzeugidentifikationsmerkmal verwendet wird, und wobei das zweite Fahrzeugidentifikationsmerkmal vorzugsweise eine Fahrzeugidentifizierungsnummer und/oder einen Motorcode und/oder eine Steuergerätidentifizierungsnummer umfasst.

11. Verfahren nach einem der vorhergehenden Ansprüche, umfassend den folgenden Schritt:
- Bereitstellen von Fahrzeug-Identifizierenden-Beschreibungsdaten nach dem Identifizieren des Fahrzeugs.

12. Verfahren zum Durchführen einer Fahrzeugdiagnose, umfassend ein Verfahren zum Identifizieren eines Fahrzeugs nach einem der vorhergehenden Ansprüche 1 bis 11 und den folgenden Schritt:
- Durchführen einer Fahrzeugdiagnose an dem identifizierten Fahrzeug.

13. Vorrichtung zum Durchführen eines Verfahrens nach einem der vorhergehenden Ansprüche, wobei die Vorrichtung vorzugsweise ein Fahrzeugdiagnosegerät ist.

14. Computerprogramm mit Programmcodemitteln, das dazu eingerichtet ist, ein Verfahren nach einem der Ansprüche 1 bis 12 auszuführen, wenn das Computerprogramm auf einer Recheneinheit, insbesondere einer Recheneinheit in einer Vorrichtung gemäß Anspruch 13, ausgeführt wird.

15. Maschinenlesbares Speichermedium mit einem darauf gespeicherten Computerprogramm nach Anspruch 14.
